# EUROPÄISCHE PATENTSCHRIFT

(11) **EP 2 159 001 B1**
(45) Veröffentlichungstag und Bekanntmachung des Hinweises auf die Patenterteilung: **14.07.2010**
(21) Anmeldenummer: 08015243.2
(22) Anmeldetag: 29.08.2008
(51) Int. Cl.: B24B 41/00, B23Q 7/10, B23Q 7/16, B65G 47/00

(54) **Vorrichtung zur Fein- oder Feinstbearbeitung von Werkstücken**
Device for fine finishing or superfinishing workpieces
Dispositif de traitement fin ou très fin de pièces à usiner

(43) Veröffentlichungstag der Anmeldung: 03.03.2010
(73) Patentinhaber: Supfina Grieshaber GmbH & Co. KG, 77709 Wolfach (DE)
(72) Erfinder: Wolber, Simon, 77709 Wolfach (DE)
(74) Vertreter: Thielking, Klaus

(56) Entgegenhaltungen:
- EP-A- 0 197 364
- WO-A-02/00392
- DE-U1- 29 825 149
- US-A- 3 628 291

## Beschreibung

Die vorliegende Erfindung betrifft eine Vorrichtung zur Fein- oder Feinstbearbeitung von Werkstücken, mit einer Transporteinrichtung zum Transport mindestens eines Werkstücks, mit einer Speichereinrichtung, welches ein Magazin zur Bevorratung mindestens eines Werkstücks umfasst, und mit einem Werkzeug zur Bearbeitung mindestens eines Werkstücks, wobei das mindestens eine Werkstück aus dem Magazin der Speichereinrichtung heraus der Transporteinrichtung zuführbar ist, wobei die Transporteinrichtung derart bewegbar ist, dass ein an der Transporteinrichtung gehaltenes Werkstück zu dem Werkzeug transportierbar ist. Eine solche Vorrichtung ist z.B. aus der US-A-3 628 291 bekannt.

Eine solche Vorrichtung ermöglicht es, mindestens ein Werkstück in einer von dem Werkzeug entfernten Lage zu bevorraten und von dort aus mit Hilfe der Transporteinrichtung dem Werkzeug zuzuführen. Durch die räumliche Entkopplung des Werkzeugs und des Werkstückvorrats ist es möglich, das Magazin der Speichereinrichtung mit weiteren Werkstücken nachzufüllen, ohne dabei einen Bearbeitungsvorgang des Werkzeugs an einem Werkstück zu stören. Auf diese Weise kann die Vorrichtung zumindest weitestgehend unterbrechungsfrei betrieben werden.

Der vorliegenden Erfindung liegt die Aufgabe zugrunde, eine Vorrichtung zur Fein- oder Feinstbearbeitung von Werkstücken zu schaffen, welche eine besonders zuverlässige Überführung des Werkstücks aus dem Magazin zu der Transporteinrichtung ermöglicht.

Diese Aufgabe wird bei einer Vorrichtung zur Fein- oder Feinstbearbeitung von Werkstücken der eingangs genannten Art dadurch gelöst, dass das Magazin der Speichereinrichtung entlang einer Magazin-Bewegungsbahn bewegbar ist, deren Verlauf abgestimmt ist auf zumindest einen Teil einer Werkstück-Bewegungsbahn, welche ein an der Transporteinrichtung gehaltenes Werkstück während des Transports von dem Magazin der Speichereinrichtung zum Werkzeug durchläuft.

Die Bewegbarkeit des Magazins der Speichereinrichtung in einer auf die Bewegung eines an der Transporteinrichtung gehaltenen Werkstücks abgestimmten Weise ermöglicht es, dass das Magazin und ein an der Transporteinrichtung gehaltenes Werkstück miteinander synchron zu bewegen. Somit kann ein Werkstück, welches nicht vollständig aus dem Magazin der Speichereinrichtung heraus der Transporteinrichtung zugeführt wurde, sich nicht nur gemeinsam mit der Transporteinrichtung, sondern zusätzlich gemeinsam mit dem Magazin der Speichereinrichtung bewegen. Während der Bewegung des Magazins in zu der Transporteinrichtung synchroner Weise kann sich also auch ein Werkstück, welches noch in einem teilweisen Eingriff mit dem Magazin steht, in entsprechender Weise mitbewegen. Auf diese Weise wird eine Relativbewegung zwischen dem Magazin der Speichereinrichtung, dem noch nicht vollständig überführten Werkstück und der Transporteinrichtung verhindert. Hierdurch kann eine Zerstörung des Magazins der Speichereinrichtung und/oder eines zu überführenden Werkstücks und/oder der Transporteinrichtung verhindert werden.

Während der gemeinsamen Bewegung des Magazins der Speichereinrichtung, des Werkstücks und der Transporteinrichtung kann ein Werkstück vollständig der Transporteinrichtung zugeführt werden, so dass es außer Eingriff mit dem Magazin der Speichereinrichtung gerät. Dies hat den Vorteil, dass die Transporteinrichtung nicht angehalten werden muss, so dass die Zuführung des Werkstücks in Richtung auf das Werkzeug nicht unterbrochen werden muss. Hierdurch wird die Durchsatzzeit der erfindungsgemäßen Vorrichtung erhöht.

Für den Fall, dass ein Werkstück auch während der gemeinsamen Bewegung des Magazins der Speichereinrichtung, des Werkstücks und der Transporteinrichtung nicht in oder an die Transporteinrichtung überführt werden kann, das Werkstück sich also beispielsweise dauerhaft verkantet hat, steht zumindest ein der Länge der Magazin-Bewegungsbahn entsprechender Anhalteweg zum Anhalten der Transporteinrichtung zur Verfügung. Somit muss die Transporteinrichtung nicht abrupt angehalten werden.

Es liegt im Rahmen der Erfindung, dass das Magazin nicht nur entlang der Magazin-Bewegungsbahn bewegbar ist, sondern auch in Richtungen quer hierzu. Es ist jedoch wichtig, dass das Magazin der Speichereinrichtung zumindest derart beweglich ist, dass es der Bewegung des Werkstücks entlang zumindest eines Teils der Werkstück-Bewegungsbahn folgen kann.

Insbesondere weisen die Magazin-Bewegungsbahn und die Werkstück-Bewegungsbahn zueinander zumindest annähernd parallele Richtungskomponenten auf. Entlang der zueinander parallelen Richtungskomponenten ist die Bewegbarkeit des Magazins also an die Bewegung des Werkstücks entlang der Werkstück-Bewegungsbahn angepasst. In zu den zueinander parallelen Richtungskomponenten verlaufenden Querrichtungen kann eine zusätzliche Bewegbarkeit vorgesehen sein, beispielsweise indem das Magazin der Speichereinrichtung während einer gemeinsamen Bewegung mit der Transporteinrichtung derart bewegbar ist, dass ein Abstand zwischen dem Magazin der Speichereinrichtung und der Transporteinrichtung vergrößert wird.

Bevorzugt ist es, wenn die Magazin-Bewegungsbahn und die Werkstück-Bewegungsbahn zumindest annähernd parallel zueinander, insbesondere exakt parallel zueinander verlaufen. Auf diese Weise wird eine für eine Überführung eines Werkstücks aus dem Magazin der Speichereinrichtung in oder an die Transporteinrichtung zur Verfügung stehende Übergabezeit verlängert. Hierbei bleibt eine räumliche Beziehung zwischen dem Magazin der Speichereinrichtung und der Transporteinrichtung während der gemeinsamen Bewegung des Magazins der Speichereinrichtung und der Transporteinrichtung unverändert.

Eine besonders vorteilhafte Ausführungsform der Erfindung sieht vor, dass die Magazin-Bewegungsbahn und die Werkstück-Bewegungsbahn gekrümmt sind. Dies ermöglicht eine besonders raumsparende Anordnung der Speichereinrichtung, der Transporteinrichtung und des Werkzeugs der Vorrichtung.

In vorteilhafter Weise verlaufen die Magazin-Bewegungsbahn und die Werkstück-Bewegungsbahn jeweils entlang eines Kreisbogens.

Besonders bevorzugt ist es, wenn die Magazin-Bewegungsbahn und die Werkstück-Bewegungsbahn einen gemeinsamen Krümmungsmittelpunkt aufweisen. Beispielsweise können sich die beiden Bewegungsbahnen in einem Winkelsektor von ungefähr 5° bis ungefähr 50°, insbesondere von ungefähr 20° bis ungefähr 35°, überdecken. Innerhalb dieses Winkelsektors ist das Magazin der Speichereinrichtung um denselben Krümmungsmittelpunkt bewegbar wie ein an der Transporteinrichtung gehaltenes Werkstück.

Bevorzugt ist es, wenn eine Führungseinrichtung zur Führung des Magazins entlang der Magazin-Bewegungsbahn vorgesehen ist. Eine solche Führungseinrichtung ermöglicht eine exakte Vorgabe der Magazin-Bewegungsbahn. Beispielsweise kann mit Hilfe einer Führungseinrichtung die Führung des Magazins entlang eines bogenförmigen, insbesondere kreisbogenförmigen, Abschnitts vorgegeben werden.

In vorteilhafter Weise umfasst die Vorrichtung eine Einstelleinrichtung zur Einstellung der Position des Magazins relativ zu der Transporteinrichtung. Auf diese Weise können die Bewegungsbahnen des Magazins und eines an der Transporteinrichtung gehaltenen Werkstücks exakt aufeinander abgestimmt werden. Dies ist insbesondere vorteilhaft, wenn die Vorrichtung mit hinsichtlich ihrer Größe und/oder ihres Aufbaus unterschiedlichen Transporteinrichtungen betreibbar ist und/oder wenn unterschiedlich dimensionierte Werkstücke bearbeitet werden sollen.

In vorteilhafter Weise ist die Transporteinrichtung in Form einer Transportscheibe ausgebildet. Eine solche Transportscheibe ermöglicht die Vorgabe einer kreisbogenförmigen Werkstück-Bewegungsbahn. Darüber hinaus ermöglicht es eine Transportscheibe, mehrere Haltebereiche oder Aufnahmebereiche vorzusehen, so dass eine Mehrzahl von Werkstücken gleichzeitig transportierbar ist.

Besonders bevorzugt ist, wenn das mindestens eine Werkzeug der Vorrichtung ein Schleifwerkzeug oder ein Finishwerkzeug ist. Hierbei können an der Transporteinrichtung gehaltene Werkstücke einem Schleif- oder Finish-Werkzeug zugeführt, bearbeitet und wieder abgeführt werden. Hierbei kann sich die Transporteinrichtung kontinuierlich bewegen und während dieser Bewegung aus dem Magazin der Speichereinrichtung herausgeführte neue Werkstücke aufnehmen.

Insbesondere handelt es sich bei dem Werkzeug um ein Planschleifwerkzeug, welches eine zu einer Bewegungsebene der Transporteinrichtung parallele Wirkfläche aufweist.

Besonders bevorzugt ist es, wenn beidseits der Transporteinrichtung Werkzeuge angeordnet sind, so dass eine gleichzeitige Bearbeitung insbesondere einander gegenüberliegender Flächen des Werkstücks möglich ist, beispielsweise im Rahmen eines Doppelplanschleifverfahrens.

Bevorzugt ist es ferner, wenn die Zuführeinrichtung eines Werkstücks aus dem Magazin zu der Transporteinrichtung quer, insbesondere senkrecht, zu der Werkstück-Bewegungsbahn verläuft. Dies ermöglicht eine besonders einfache Zuführung eines Werkstücks aus dem Magazin in Richtung auf die Transporteinrichtung. Insbesondere ist es möglich, mehrere Werkstücke in dem Magazin zu bevorraten, welche gemeinsam einen Stapel von Werkstücken bilden.

Die Zuführrichtung aus dem Magazin zu der Transporteinrichtung kann bezogen auf die Schwerkraftrichtung zumindest annähernd vertikal verlaufen, so dass die Überführung des Werkstücks aus dem Magazin zu der Transporteinrichtung schwerkraftunterstützt erfolgen kann, so dass ein Werkstück durch das Eigengewicht bedingt aus dem Magazin herausfällt und der Transporteinrichtung zugeführt wird.

In vorteilhafter Weise ist die Speichereinrichtung zwischen einer Grundposition und einer Endposition bewegbar. Die Vorgabe einer Grundposition ermöglicht eine besonders einfache und in vorteilhafter Weise automatisierte Zuführung von zu bearbeitenden Werkstücken aus einem externen Vorrat in das Magazin der Speichereinrichtung. Die Vorgabe der Grundposition ermöglicht es außerdem, eine bevorzugte Position der Speichereinrichtung zu definieren, in welcher während des Normalbetriebs der Vorrichtung eine Überführung eines Werkstücks aus dem Magazin zu der Transporteinrichtung erfolgen soll. Die Vorgabe einer Endposition ermöglicht es, den Bewegungsraum der Speichereinrichtung zu begrenzen, so dass eine Kollision mit weiteren Bauteilen der Vorrichtung ausgeschlossen werden kann.

Vorteilhaft ist es ferner, wenn eine Fixiereinrichtung vorgesehen ist, mittels welcher die Speichereinrichtung lösbar in der Grundposition fixierbar ist. Auf diese Weise ist gewährleistet, dass die Speichereinrichtung in ihrer Grundposition verbleibt, sofern nicht ein Verkanten des Werkstücks zwischen dem Magazin und der Transporteinrichtung einen Auslösewiderstand der Fixiereinrichtung überschreitet. Beispielsweise ist die Fixiereinrichtung durch eine Rasteinrichtung gebildet, welche insbesondere eine federbelastete Kugel umfasst.

In vorteilhafter Weise ist ein Auslösewiderstand der Fixiereinrichtung einstellbar. Für das Beispiel einer federbelasteten Kugel kann die Vorspannung der Feder verändert werden, so dass ein gewünschter Auslösewiderstand der Rasteinrichtung vorgegeben werden kann.

Nach einer Weiterbildung der Erfindung ist eine Vorwärts-Antriebseinrichtung zum Antrieb der Speichereinrichtung in Richtung auf die Endposition vorgesehen. Eine solche Vorwärts-Antriebseinrichtung ermöglicht es, die Speichereinrichtung nach dem Verlassen der Grundposition zu beschleunigen, wodurch ein Lösen des Werkstücks von dem Magazin unterstützt wird. Im einfachsten Fall ist die Vorwärts-Antriebseinrichtung durch eine vorgespannte Feder gebildet. Für den Fall, dass die Vorrichtung eine vorstehend beschriebene Fixiereinrichtung mit einem einstellbaren Auslösewiderstand umfasst, ist es möglich, den Auslösewiderstand der Spannkraft einer Vorwärts-Antriebseinrichtung entsprechend zu erhöhen.

Um ein Lösen des Werkstücks von dem Magazin zu unterstützen, ist es alternativ oder zusätzlich möglich, einen Impulsgeber vorzusehen, welcher einen mechanischen Impuls auf das Werkstück und/oder das Magazin der Speichereinrichtung ausübt. Hierbei handelt es sich im einfachsten Fall um einen Stößel, welcher beispielsweise pneumatisch angetrieben ist. Ein Impulsgeber kann einen einfachen Stoß auf das Werkstück und/oder das Magazin ausüben und/oder das Werkstück und/oder das Magazin in Vibration versetzen.

Nach einer weiteren vorteilhaften Ausführungsform der Erfindung ist eine Rückwärts-Antriebseinrichtung zum Antrieb der Speichereinrichtung in Richtung auf die Grundposition vorgesehen. Dies ermöglicht es, die Speichereinrichtung aus einer von der Grundposition abweichenden Position zurück in die Grundposition zu überführen. Beispielsweise kann die Rückwärts-Antriebseinrichtung in Form einer Rückholfeder ausgebildet sein. Zusätzlich oder alternativ hierzu ist es möglich, einen motorischen Antrieb vorzusehen.

In vorteilhafter Weise umfasst die Vorrichtung eine Erfassungseinrichtung zur Erfassung einer Position und/oder einer Bewegung der Speichereinrichtung. Hierfür können Schalter und/oder Sensoren verwendet werden, mit welchen beispielsweise erfasst werden kann, dass sich die Speichereinrichtung in einer Grundposition, einer Zwischenposition oder einer Endposition befindet.

In vorteilhafter Weise ist die Erfassungseinrichtung zur Erfassung einer Position und/oder einer Bewegung der Speichereinrichtung mit einer Steuereinrichtung zur Ansteuerung eines Antriebs der Transporteinrichtung gekoppelt, so dass der Antrieb der Transporteinrichtung bei Bedarf automatisch abschaltbar ist. Dies kann beispielsweise mit einer Erfassung der Speichereinrichtung in einer Zwischenposition einhergehen, so dass die Transporteinrichtung innerhalb eines Anhaltewegs angehalten werden kann, dessen Ende durch die Endposition der Speichereinrichtung definiert ist.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine Draufsicht auf eine Ausführungsform einer Vorrichtung zur Fein- oder Feinstbearbeitung von Werkstücken mit einem Werkzeug, einer Transporteinrichtung und einer Speichereinrichtung;
- Figur 2: eine perspektivische Ansicht der Speichereinrichtung der Vorrichtung gemäß Figur 1; und
- Figur 3: eine Draufsicht auf eine Führungseinrichtung der Speichereinrichtung gemäß Figur 2.

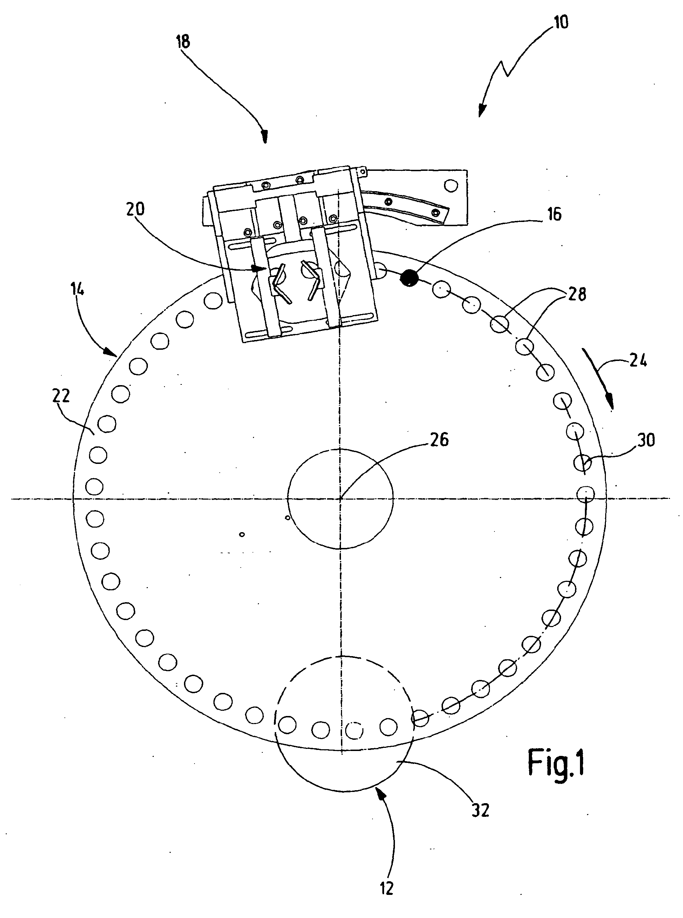

Eine Ausführungsform einer in Figur 1 insgesamt mit 10 bezeichneten Vorrichtung zur Fein- oder Feinstbearbeitung von Werkstücken weist ein Werkzeug 12 auf. Die Vorrichtung 10 umfasst ferner eine Transporteinrichtung 14, mittels welcher ein in der Zeichnung schematisch dargestelltes Werkstück 16 dem Werkzeug 12 zugeführt werden kann. Ferner umfasst die Vorrichtung 10 eine Speichereinrichtung 18 mit einem Magazin 20 zur Bevorratung von Werkstücken 16.

Die Transporteinrichtung 14 ist vorzugsweise durch eine Transportscheibe 22 gebildet, welche rotierend antreibbar ist und sich dabei in einer Antriebsrichtung 24 um einen Mittelpunkt 26 dreht.

Die Transporteinrichtung 14 weist eine Mehrzahl von Haltebereichen 28 auf, welche zum Halten eines Werkstücks 16 an der Transporteinrichtung 14 dienen. Die Haltebereiche sind fest mit der Transporteinrichtung 14 verbunden oder sind integraler Bestandteil der Transporteinrichtung 14. Beispielsweise sind die Haltebereich 28 durch an oder in der Transporteinrichtung ausgebildete Aussparungen oder Ausnehmungen gebildet. Während des Transports eines an einem Haltebereich 28 gehaltenen Werkstücks 16 bewegt sich dieses entlang einer gekrümmten Werkstück-Bewegungsbahn 30 um den Mittelpunkt 26 herum.

Das Werkzeug 12 der Vorrichtung 10 ist beispielsweise als Schleifwerkzeug 32 oder als Finishwerkzeug ausgebildet. Ein scheibenförmiges Schleif- oder Finishwerkzeug, welches - wie in Figur 1 dargestellt - in einander überlappender Anordnung mit der Transporteinrichtung 14 angeordnet ist, ermöglicht eine Planschleifbearbeitung eines Werkstücks 16. Es ist möglich, dass zwei Schleif- oder Finishwerkzeuge 32 vorgesehen sind, welche beidseits der Transporteinrichtung 14 angeordnet sind, also beispielsweise bezogen auf die Schwerkraftrichtung unterhalb und oberhalb der Transporteinrichtung 14.

Das Magazin 20 der Speichereinrichtung 18 weist einen Magazinraum 34 auf, in welchem entlang einer Stapelachse 36 eine Mehrzahl von aufeinander gestapelten Werkstücken 16 anordenbar ist. Die Stapelachse 36 verläuft vorzugsweise in einer bezogen auf die Schwerkraftrichtung vertikalen Richtung.

Der Magazinraum 34 ist von Magazinwänden 38, 40 begrenzt, welche sich parallel zu der Stapelachse 36 erstrecken.

Um das Einführen von Werkstücken 16 in den Magazinraum 34 zu erleichtern, weist das Magazin 20 trichterförmige Führungsabschnitte 42 auf, welche beispielsweise einstückig mit den Magazinwänden 38, 40 ausgebildet sein können.

Die Magazinwände 38, 40 sind jeweils an Magazinhaltern 44, 46 gehalten.

Die Speichereinrichtung 18 weist ein insgesamt mit 48 bezeichnetes Gestell auf. Die Magazinhalter 44, 46 sind jeweils über eine Verbindungseinrichtung 49, 50 mit dem Gestell 48 der Speichereinrichtung 18 verbunden. Die Verbindungseinrichtungen 49, 50 sind beispielsweise in Form von T-Nut-Verbindungen ausgebildet, welche eine Einstellbarkeit eines Abstands der Magazinhalter 44, 46 und somit eines Abstandes der Magazinwände 38, 40 ermöglichen. Beispielsweise können die Magazinwände 38, 40 in einem Abstand 52 parallel oder tangential zu der Werkstück-Bewegungsbahn 30 verstellbar sein, so dass unterschiedlich große Werkstücke 16 in dem Magazinraum 34 aufgenommen werden können.

Das Gestell 48 ist mit Hilfe einer Führungseinrichtung 54 an einem ortsfesten Träger 56 der Vorrichtung 10 geführt. Die Führungseinrichtung 54 umfasst eine entlang eines Kreisbogens gekrümmte Führungsschiene 58, welche mit dem Träger 56 verbunden ist. Ferner umfasst die Führungseinrichtung 54 mindestens ein mit dem Gestell 48 der Speichereinrichtung 18 verbundenes Führungselement 60. Beispielsweise umfasst die Speichereinrichtung 18 zwei Führungselemente 60. Ein Führungselement 60 ist insbesondere in Form eines Gleitschuhs ausgebildet.

Das mindestens eine Führungselement 60 ist mit einem Grundkörper 62 des Gestells 48 verbunden. Der Grundkörper 62 weist Führungsbahnen 64 auf, welche quer zu der Werkstück-Bewegungsbahn 30 verlaufen. An den Führungsbahnen 64 des Grundkörpers 62 ist ein Gestellelement 66 des Gestells 48 verschieblich gelagert. Auf diese Weise kann das Gestellelement 66 in einer Richtung 68 quer, insbesondere senkrecht, zu der Werkstück-Bewegungsbahn 30 verschoben werden. Der Grundkörper 62 und das Gestellelement 66 sind miteinander fixierbar, beispielsweise mit Hilfe von aus Übersichtsgründen nicht dargestellten Klemmkörpern, Schrauben oder Gewindestiften.

An dem Gestellelement 66 sind zwei Gestellteile 70 verschieblich gelagert. Dabei ist die Relativlage zwischen dem Gestellelement 66 und dem Gestellteilen 70 in einer Höhenrichtung 72 einstellbar. Die Höhenrichtung 72 verläuft vorzugsweise parallel zu der Stapelachse 36 des Magazins 20. Das Gestellelement 66 und die Gestellteile 70 sind miteinander fixierbar, beispielsweise mit Hilfe von aus Übersichtsgründen nicht dargestellten Klemmkörpern, Schrauben oder Gewindestiften.

Die Gestellteile 70 sind mit einer Gestellplatte 74 verbunden, welche auch integraler Bestandteil der Gestellplatten 70 sein kann. An der Gestellplatte 74 sind die Magazinhalter 44, 46 in der vorstehend beschriebenen Weise verstellbar gelagert.

Der Grundkörper 62, das Gestellelement 66 und die Gestellteile 70 bilden eine Einstelleinrichtung 76, mittels welcher die Position des Magazins 20 relativ zu der Transporteinrichtung 14 einstellbar ist. Eine Einstellung in der Höhenrichtung 72 bewirkt, dass der Abstand des Magazins 20 in zu der Stapelachse 36 paralleler Richtung zu der Transporteinrichtung 14 eingestellt wird. Eine Einstellung in zu der Richtung 68 parallelen Richtung bewirkt eine Verschiebung der Position des Magazins 20 in Richtung auf den Mittelpunkt 26 der Transporteinrichtung 14 oder hierzu entgegengesetzt.

Die Speichereinrichtung 18 ist mit Hilfe einer Fixiereinrichtung 78 an dem Träger 56 und/oder an der Führungsschiene 58 der Führungseinrichtung 54 fixiert. Beispielsweise ist die Fixiereinrichtung 78 in Form einer federbelasteten Kugel ausgebildet, welche an einem Führungselement 60 angeordnet ist. Eine solche Kugel greift beispielsweise in eine an dem Träger 56 oder an der Führungsschiene 58 ausgebildete Vertiefung, so dass insgesamt eine Rasteinrichtung gebildet werden kann, mit welcher die Speichereinrichtung 18 lösbar in ihrer in der Zeichnung dargestellten Grundposition fixiert ist. Aus dieser Grundposition heraus ist die Speichereinrichtung 18 bei Überwindung des Auslösewiderstands der Fixiereinrichtung 78 in einer der Antriebsrichtung 24 der Transporteinrichtung 14 entsprechenden Richtung 80 bewegbar.

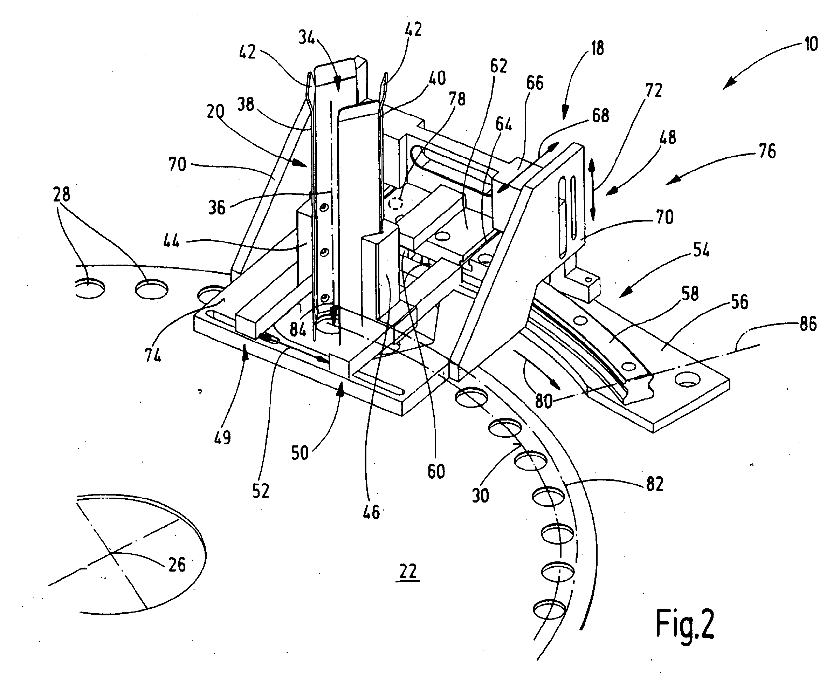

Mit Hilfe der Führungseinrichtung 54 ist die Speichereinrichtung 18 und somit das Magazin 20 entlang einer Magazin-Bewegungsbahn 82 bewegbar. Die Magazin-Bewegungsbahn 82 ist durch den Verlauf der Führungsschiene 58 vorgegeben. Der Krümmungsmittelpunkt der Führungsschiene 58 stimmt mit dem Mittelpunkt 26 der Transporteinrichtung 14 überein. Auf diese Weise verläuft die Magazin-Bewegungsbahn 82 parallel zu der Werkstück-Bewegungsbahn 30. Wenn bei einer sich drehenden Transporteinrichtung 14 ein in dem Magazinraum 34 aufgenommenes Werkstück 16 in Überdeckungslage mit einem Haltebereich 28 der Transporteinrichtung 14 gerät, fällt das Werkstück 16 in einer quer zu der Werkstück-Bewegungsbahn 30 verlaufenden Zuführrichtung 84 in den Haltebereich 28 hinein. Für den Fall, dass ein Werkstück 16 nicht vollständig aus dem Magazinraum 34 abgeführt wird, während sich die Speichereinrichtung 18 in ihrer Grundposition befindet, kann es vorkommen, dass ein solches Werkstück sich mit dem Haltebereich 28 und mit dem unteren Rand der Magazinwände 38, 40 verkantet. Da sich die Transporteinrichtung 14 weiterdreht, übt ein verkantetes Werkstück 16 ausgehend von dem Haltebereich 28 eine Kraft auf eine in Antriebsrichtung 24 der Transporteinrichtung 14 folgende Magazinwand 40 aus. Übersteigt diese Kraft den Auslösewiderstand der Fixiereinrichtung 78, wird die Speichereinrichtung 18 in einer Bewegungsrichtung 80 in Richtung auf eine (in Figur 2 mit einer gestrichelten Linie 86 angedeuteten) Endposition bewegt. Auf diese Weise kann eine Zerstörung eines Haltebereichs 28 und/oder eines verkanteten Werkstücks 16 und/oder einer Magazinwand 38, 40 des Magazins 20 verhindert werden. Außerdem ist es nicht erforderlich, die Transporteinrichtung 14 zu stoppen, so dass ein weiteres, im Eingriff mit dem Werkzeug 12 befindliches Werkstück 16 kontinuierlich weiterbearbeitet werden kann.

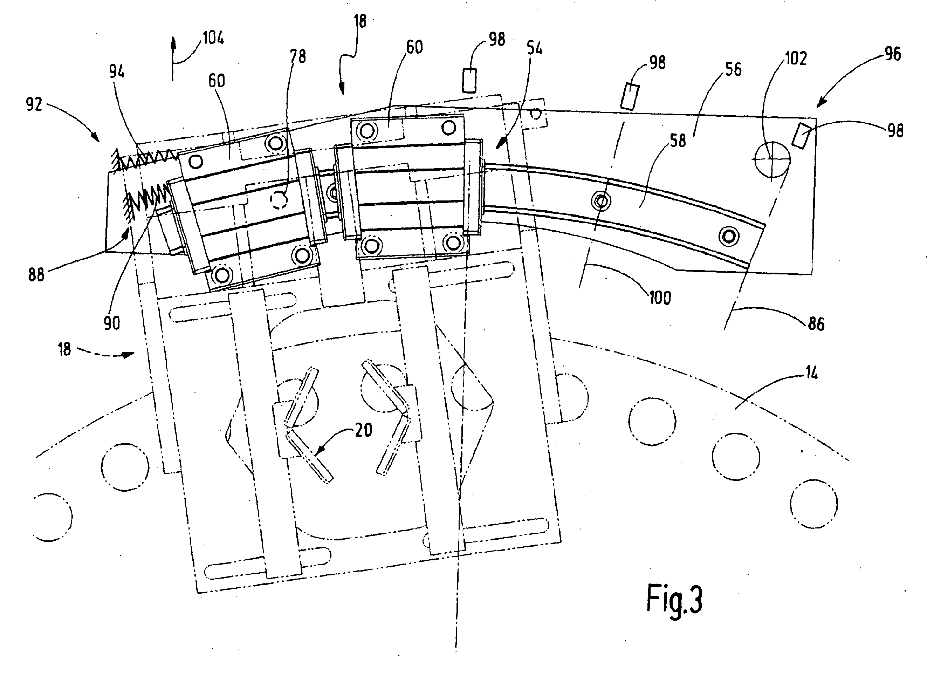

Es ist möglich, die Bewegung der Speichereinrichtung 18 aus der Grundposition heraus mit Hilfe einer (in Figur 3 dargestellten) Vorwärts-Antriebseinrichtung 88 zu unterstützen, so dass die Speichereinrichtung 18 aus der Grundposition heraus in Richtung auf die Endposition 86 beschleunigt werden kann. Beispielsweise ist die Vorwärts-Antriebseinrichtung durch eine Druckfeder 90 gebildet, welche sich an dem ortsfesten Träger 56 abstützt.

Ferner ist es möglich, eine aus der Grundposition ausgelenkte Speichereinrichtung mit Hilfe einer Rückwärts-Antriebseinrichtung 92 zurück in die Grundposition zu überführen. Hierfür kann beispielsweise eine Zugfeder 94 verwendet werden, welche die Speichereinrichtung 18 mit dem ortsfesten Träger 56 verbindet.

Schließlich kann eine Erfassungseinrichtung 96 vorgesehen sein, welche beispielsweise Sensoren 98 umfasst, denen jeweils verschiedene Positionen der Speichereinrichtung 18 zugeordnet sind. Beispielsweise umfasst die Erfassungseinrichtung 96 Positionssensoren, welche jeweils der Grundposition, einer Zwischenposition (in Figur 3 mit der gestrichelten Linie 100 angedeutet) und der Endposition 86 zugeordnet sind.

In vorteilhafter Weise ist die Erfassungseinrichtung 96 mit einer Steuereinrichtung zur Steuerung des Antriebs der Transporteinrichtung 14 gekoppelt. Wenn beispielsweise erfasst wird, dass die Speichereinrichtung 18 ihre Grundposition verlassen hat und/oder die Speichereinrichtung 18 die Zwischenposition 100 erreicht hat, kann der Antrieb der Transporteinrichtung 14 derart angesteuert werden, dass die Transporteinrichtung 14 innerhalb des bis zum Erreichen der Endposition 86 zur Verfügung stehenden Anhaltewegs anhält.

Der ortsfeste Träger 56 ist vorzugsweise um einen Lagerpunkt 102 verschwenkbar, so dass der Träger gemeinsam mit der Führungsschiene 58 und der Speichereinrichtung 18 einer Schwenkrichtung 104 entsprechend von der Transporteinrichtung 14 weg schwenkbar ist. Dies erleichtert die Zugänglichkeit zu der Transporteinrichtung 14 zu Wartungszwecken und/oder zum Austausch der Transporteinrichtung 14.

Der Radius der Führungsschiene 58 beträgt beispielsweise zwischen ungefähr 40 cm und ungefähr 80 cm, insbesondere ungefähr 60 cm. Die in dem Magazin 20 aufnehmbaren Werkstücke können beispielsweise scheibenförmig sein und einen Durchmesser von beispielsweise ungefähr 30 mm bis ungefähr 150 mm aufweisen. Der Abstand zwischen dem unteren Rand der Magazinwände 38, 40 und der dem Magazin 20 zugewandten Fläche der Transporteinrichtung 14 kann beispielsweise maximal ungefähr 30 mm betragen. Der für eine Bewegung der Speichereinrichtung 18 zwischen ihrer Grundposition und der Endposition 86 zur Verfügung stehende Weg überstreicht beispielsweise einen Winkelsektor, bezogen auf den Mittelpunkt 26, von ungefähr 20° bis ungefähr 35°, insbesondere ungefähr 25° bis ungefähr 30°.

## Patentansprüche

1. Vorrichtung zur Fein- oder Feinstbearbeitung von Werkstücken, mit einer Transporteinrichtung (14) zum Transport mindestens eines Werkstücks (16), mit einer Speichereinrichtung (18), welches ein Magazin (20) zur Bevorratung mindestens eines Werkstücks (16) umfasst, und mit einem Werkzeug (12) zur Bearbeitung mindestens eines Werkstücks (16), wobei das mindestens eine Werkstück (16) aus dem Magazin (20) der Speichereinrichtung (18) heraus der Transporteinrichtung (14) zuführbar ist, wobei die Transporteinrichtung (14) derart bewegbar ist, dass ein an der Transporteinrichtung (14) gehaltenes Werkstück (16) zu dem Werkzeug (12) transportierbar ist, **dadurch gekennzeichnet, dass** das Magazin (20) der Speichereinrichtung (18) entlang einer Magazin-Bewegungsbahn (82) bewegbar ist, deren Verlauf abgestimmt ist auf zumindest einen Teil einer Werkstück-Bewegungsbahn (30), welche ein an der Transporteinrichtung (14) gehaltenes Werkstück (16) während des Transports von dem Magazin (20) der Speichereinrichtung (18) zum Werkzeug (12) durchläuft.

2. Vorrichtung nach Anspruch 1, **dadurch gekennzeichnet, dass** die Magazin-Bewegungsbahn (82) und die Werkstück-Bewegungsbahn (30) zueinander zumindest annähernd parallele Richtungskomponenten aufweisen.

3. Vorrichtung nach Anspruch 1 oder 2, **dadurch gekennzeichnet, dass** die Magazin-Bewegungsbahn (82) und die Werkstück-Bewegungsbahn (30) zumindest annähernd parallel zueinander verlaufen.

4. Vorrichtung nach einem der voranstehenden Ansprüche, **dadurch gekennzeichnet, dass** die Magazin-Bewegungsbahn (82) und die Werkstück-Bewegungsbahn (30) gekrümmt sind.

5. Vorrichtung nach Anspruch 4, **dadurch gekennzeichnet, dass** die Magazin-Bewegungsbahn (82) und die Werkstück-Bewegungsbahn (30) einen gemeinsamen Krümmungsmittelpunkt (26) aufweisen.

6. Vorrichtung nach einem der voranstehenden Ansprüche, **gekennzeichnet durch** eine Führungseinrichtung (54) zur Führung des Magazins (20.) entlang der Magazin-Bewegungsbahn (82).

7. Vorrichtung nach einem der voranstehenden Ansprüche, **gekennzeichnet durch** eine Einstelleinrichtung (76) zur Einstellung der Position des Magazins (20) relativ zu der Transporteinrichtung (14).

8. Vorrichtung nach einem der voranstehenden Ansprüche, **dadurch gekennzeichnet, dass** die Transporteinrichtung (14) in Form einer Transportscheibe (22) ausgebildet ist.

9. Vorrichtung nach einem der voranstehenden Ansprüche, **dadurch gekennzeichnet, dass** das mindestens eine Werkzeug (12) ein Schleifwerkzeug (32) oder ein Finishwerkzeug ist.

10. Vorrichtung nach einem der voranstehenden Ansprüche, **dadurch gekennzeichnet, dass** die Zuführrichtung (84) eines Werkstücks (16) aus dem Magazin (20) zu der Transporteinrichtung (14) quer zu der Werkstück-Bewegungsbahn (30) verläuft.

11. Vorrichtung nach einem der voranstehenden Ansprüche, **dadurch gekennzeichnet, dass** die Speichereinrichtung (18) zwischen einer Grundposition und einer Endposition bewegbar ist.

12. Vorrichtung nach Anspruch 11, **gekennzeichnet durch** eine Fixiereinrichtung (78), mittels welcher die Speichereinrichtung (18) lösbar in der Grundposition fixierbar ist.

13. Vorrichtung nach Anspruch 11 oder 12, **gekennzeichnet durch** eine Vorwärts-Antriebseinrichtung (88) zum Antrieb der Speichereinrichtung (18) in Richtung auf die Endposition.

14. Vorrichtung nach einem der Ansprüche 10 bis 13, **gekennzeichnet durch** eine Rückwärts-Antriebseinrichtung (92) zum Antrieb der Speichereinrichtung (18) in Richtung auf die Grundposition.

15. Vorrichtung nach einem der voranstehenden Ansprüche, **gekennzeichnet durch** eine Erfassungseinrichtung (96) zur Erfassung einer Position und/oder einer Bewegung der Speichereinrichtung (18).

## Claims

1. A device for precision machining or micromachining workpieces, with a feed mechanism (14) for transporting at least one workpiece (16), with a storage device (18), which comprises a magazine (20) for storing at least one workpiece (16), and with a tool (12) for processing at least one workpiece (16), wherein the at least one workpiece (16) can be led out of the magazine (20) of storage device (18) to the feed mechanism (14), wherein the feed mechanism (14) can be moved such that a workpiece (16) held on the feed mechanism (14) can be transported to the tool (12), **characterized in that** the magazine (20) of the storage device (18) can be moved along a magazine motion path (82), whose course is aligned at least in part with a workpiece motion path (30), which is traversed by a workpiece (16) held on the feed mechanism (14) during the transport from the magazine (20) of the storage device (18) to the tool (12).

2. The device according to claim 1, **characterized in that** the magazine motion path (82) and the workpiece motion path (30) have at least approximately parallel direction components relative to one another.

3. A device according to any one of claims 1 or 2, **characterized in that** the magazine motion path (82) and the workpiece motion path (30) run at least approximately parallel relative to one another.

4. A device according to any one of the preceding claims, **characterized in that** the magazine motion path (82) and the workpiece motion path (30) are curved.

5. The device according to claim 4, **characterized in that** the magazine motion path (82) and the workpiece motion path (30) have a common center of curvature (26).

6. A device according to any one of the preceding claims, **characterized by** a guiding mechanism (54) for guiding the magazine (20) along the magazine motion path (82).

7. A device according to any one of the preceding claims, **characterized by** an adjusting mechanism (76) for adjustment of the position of the magazine (20) relative to the feed mechanism (14).

8. A device according to any one of the preceding claims, **characterized in that** the feed mechanism (14) is configured in the form of a feed plate (22).

9. A device according to any one of the preceding claims, **characterized in that** at least one tool (12) is a grinding tool (32) or a machining tool.

10. A device according to any one of the preceding claims, **characterized in that** the feeding direction (84) of a workpiece (16) from the magazine (20) to the feed mechanism (14) runs transversely to the workpiece motion path (30).

11. A device according to any one of the preceding claims, **characterized in that** the storage device (18) can be moved between a home position and an end position.

12. The device according to claim 11, **characterized by** a fixing mechanism (78), by means of which the storage device (18) can be fixed detachably in the home position.

13. A device according to any one of claims 11 or 12, **characterized by** a forward drive mechanism (88) for driving the storage device (18) in the direction of the end position.

14. A device according to any one of claims 10 to 13, **characterized by** a reverse drive mechanism (92) for driving the storage device (18) in the direction of the home position.

15. A device according to any one of the preceding claims, **characterized by** a detection device (96) for detecting a position and/or a motion of the storage device (18).

## Revendications

1. Dispositif d'usinage fin ou très fin de pièces d'oeuvre, avec une unité de transport (14) pour transporter au moins une pièce d'oeuvre (16), avec une unité d'entreposage (18) comprenant un magasin (20) pour délivrer au moins une pièce d'oeuvre (16), et avec un outil (12) pour usiner au moins une pièce d'oeuvre (16), la ou les pièces d'oeuvre (16) pouvant être amenées du magasin (20) de l'unité d'entreposage (18) jusqu'à l'unité de transport (14), l'unité de transport (14) étant mobile de telle sorte qu'une pièce d'oeuvre (16) maintenue sur l'unité de transport (14) puisse être transportée jusqu'à l'outil (12), **caractérisé en ce que** le magasin (20) de l'unité d'entreposage (18) est mobile le long d'une trajectoire de magasin (82), dont le tracé est coordonné à au moins une partie d'une trajectoire de pièce d'oeuvre (30), que parcourt une pièce d'oeuvre (16) maintenue sur l'unité de transport (14) pendant le transport depuis le magasin (20) de l'unité d'entreposage (18) jusqu'à l'outil (12).

2. Dispositif selon la revendication 1, **caractérisé en ce que** la trajectoire de magasin (82) et la trajectoire de pièce d'oeuvre (30) présentent des composantes directionnelles au moins sensiblement parallèles entre elles.

3. Dispositif selon la revendication 1 ou la revendication 2, **caractérisé en ce que** la trajectoire de magasin (82) et la trajectoire de pièce d'oeuvre (30) sont au moins sensiblement parallèles entre elles.

4. Dispositif selon l'une quelconque des revendications précédentes, **caractérisé en ce que** la trajectoire de magasin (82) et la trajectoire de pièce d'oeuvre (30) sont magasin (82) et la trajectoire de pièce d'oeuvre (30) sont incurvées.

5. Dispositif selon la revendication 4, **caractérisé en ce que** la trajectoire de magasin (82) et la trajectoire de pièce d'oeuvre (30) présentent un centre de courbure (26) commun.

6. Dispositif selon l'une quelconque des revendications précédentes, **caractérisé par** une unité de guidage (54) permettant de guider le magasin (20) le long de la trajectoire de magasin (82).

7. Dispositif selon l'une quelconque des revendications précédentes, **caractérisé par** une unité de réglage (76) permettant de régler la position du magasin (20) par rapport à l'unité de transport (14).

8. Dispositif selon l'une quelconque des revendications précédentes, **caractérisé en ce que** l'unité de transport (14) se présente sous la forme d'un disque de transport (22).

9. Dispositif selon l'une quelconque des revendications précédentes, **caractérisé en ce que** le ou les outils (12) consiste(nt) en un outil de rectification (32) ou un outil de finition.

10. Dispositif selon l'une quelconque des revendications précédentes, **caractérisé en ce que** la direction d'amenée (84) d'une pièce d'oeuvre (16) du magasin (20) vers l'unité de transport (14) est transversale à la trajectoire de pièce d'oeuvre (30).

11. Dispositif selon l'une quelconque des revendications précédentes, **caractérisé en ce que** l'unité d'entreposage (18) est mobile entre une position de base et une position finale.

12. Dispositif selon la revendication 11, **caractérisé par** une unité de fixation (78) permettant de fixer l'unité d'entreposage (18) de manière amovible dans la position de base.

13. Dispositif selon la revendication 11 ou la revendication 12, **caractérisé par** une unité d'entraînement en avant (88) pour entraîner l'unité d'entreposage (18) en direction de la position finale.

14. Dispositif selon l'une quelconque des revendications 10 à 13, **caractérisé par** une unité d'entraînement en arrière (92) pour entraîner l'unité d'entreposage (18) en direction de la position de base.

15. Dispositif selon l'une quelconque des revendications précédentes, **caractérisé par** une unité de détection (96) permettant de détecter une position et/ou un mouvement de l'unité d'entreposage (18).
